# EUROPÄISCHE PATENTSCHRIFT

(11) **EP 0 326 146 B1**
(45) Veröffentlichungstag und Bekanntmachung des Hinweises auf die Patenterteilung: **26.05.1993**
(21) Anmeldenummer: 89101414.4
(22) Anmeldetag: 27.01.1989
(51) Int. Cl.: H02P 3/06

(54) **Bremsschaltung für Universalmotoren**
Brake circuit for a universal motor
Circuit de freinage pour un moteur universel

(30) Priorität: 28.01.1988 DE 3802419
(43) Veröffentlichungstag der Anmeldung: 02.08.1989
(73) Patentinhaber: ROBERT BOSCH GMBH, 70442 Stuttgart (DE)
(72) Erfinder: Baur, Hans-Joachim, D-7022 Leinfelden-Echterdingen (DE); Fiebig, Arnim, D-7022 Leinfelden-Echterdingen (DE); Kirn, Manfred, D-7000 Stuttgart 80 (DE)

(56) Entgegenhaltungen:
- DE-A- 2 624 236
- DE-A- 3 035 185
- DE-A- 3 539 841
- DE-A- 3 636 555
- GB-A- 1 439 453
- US-A- 3 548 276
- US-A- 4 144 482
- US-A- 4 751 414

## Beschreibung

### Stand der Technik

Die Erfindung geht aus von einer Schaltungsanordnung zum Abbremsen eines Elektromotors nach der Gattung des Hauptanspruchs.

Zum Antrieb von Elektrohandwerkzeugen, wie Heckenscheren, Kettensägen oder Rasenmäher, werden häufig Universalmotoren verwendet, die nach Abschaltung der Netzspannung aufgrund der kinetischen Energie ihres Antriebes eine längere Nachlaufzeit aufweisen. Da die mit dem Antrieb nachlaufenden Werkzeuge wie Schneidemesser, Scheren, Sägen oder Ketten eine nicht unerhebliche Verletzungsgefahr für den Bediener darstellen, ist es zweckmäßig, beim Abschalten des Netzes für ein schnelles Abbremsen des Motors und damit des Werkzeuges zu sorgen. Üblicherweise werden zum Bremsen des Motors Widerstände in den Stromkreis des Ankers geschaltet, in denen die kinetische Energie in Wärme umgewandelt und an die Umgebungsluft abgegeben wird.

Es ist aus der DE-OS 30 35 185 bekannt, daß als Bremswiderstand ein NTC-Widerstand in den Ankerkreis geschaltet ist, über den nach Abschalten des Netzes solange ein Strom fließt, bis der Motor steht.

Der Widerstandswert bestimmt die Höhe des Bremsstromes, der im Ankerkreis fließt. Ein kleiner Widerstand erzeugt einen großen Bremsstrom, der zwar ein kräftiges Bremsmoment ermöglicht, aber zu Schäden am Kommutator und dem Antrieb führen kann. Ein zu großer Widerstand dagegen erzeugt nur ein kleines Bremsmoment, so daß sich die Bremszeit verlängert. Durch die Verwendung eines NTC-Widerstandes wird zwar versucht, diese Nachteile dadurch auszugleichen, daß der Bremsstrom an die Betriebsbedingungen des Elektromotors angepaßt wird. Dennoch ist diese Anordnung der Bremswiderstände nachteilig, weil die Bremswiderstände für die maximale Bremsleistung des Elektromotors auszulegen sind. Ebenso sind die Kontakte der Umschalter für diesen hohen Bremsstrom konstruktiv aufwendig.

Aus der DE-OS 26 24 236 ist eine Schaltungsanordnung zum Abbremsen eines Reihenschlußmotors bekannt, bei der die Feldwicklung in zwei Teile aufgeteilt ist. Beim Bremsen wird der Anker der Motors einem Teil der Feldwicklung parallelgeschaltet. Über einen symmetrisch zu den Feldwicklungsteilen angeordneten Speicherkondensator wird durch Entladen des Kondensators die Selbsterregung der im Bremskreis verbliebenen Feldwicklung eingeleitet.

### Vorteile der Erfindung

Die erfindungsgemäße Schaltungsanordnung mit den kennzeichnenden Merkmalen des Hauptanspruchs hat demgegenüber den Vorteil, daß zum Bremsen des Ankers ein Teil der Feldwicklung dem Anker so parallel geschaltet wird, daß eine Feldschwächung auftritt, wobei der auftretende Bremsstrom nicht nur begrenzt, sondern auf einen vorgegebenen Wert nahezu bis zum Stillstand des Motors konstant gehalten wird. Besonders vorteilhaft ist, daß der Bremsstrom durch ein einfache Zenerdiode regelbar ist.

Durch die in den Unteransprüchen aufgeführten Maßnahmen sind vorteilhafte Weiterbildungen und Verbesserungen der im Hauptanspruch angegebenen Schaltungsanordnung möglich. Es ist vorteilhaft, daß der Bremsstrom der Maschine geregelt und dadurch nahezu bis zum Stillstand des Ankers konstant ist. Besonders vorteilhaft ist, daß die Bauelemente zur Regelung des Bremsstromes nur mit einem Teil des Gesamtstromes belastet werden, wodurch sie kleiner und kostengünstiger ausgelegt werden können. Auch ist vorteilhaft, daß die Schaltungsanordnung zum Abbremsen des Ankers nur aus wenigen Bauelementen aufgebaut ist, die zu einer Einheit mit kleiner Bauform montiert werden kann.

Durch die Verwendung von zwei gegeneinander gepolten Zenerdioden ist besonders vorteilhaft der Bremsstrom bei einem wechselspannungsgespeisten Reihenschlußmotor regelbar. Solche bidirektionale Zenerdioden sind preiswert im Handel erhältlich und ermöglichen eine einfache Stromregelung.

Ein weiterer Vorteil ist, daß zur Aufrechterhaltung des Bremsstromes ein kleiner Netzstrom kontinuierlich den Feldwicklungen zugeführt wird. Dadurch wird ein Austrudeln des Motors verhindert, wenn kurzfristig die Kollektorkontakte beispielsweise durch Abbrand oder Verschmutzung unterbrochen wurden und die Erregung zusammenbrach.

Auch ist vorteilhaft, daß zur Regelung des Bremsstromes keine zusätzlichen Schaltkontakte benötigt werden. Durch den geringen Aufwand ist die Schaltungsanordnung sehr wirtschaftlich aufbaubar.

Weitere Vorteile der erfindungsgemäßen Schaltungsanordnung sind der Beschreibung und den Zeichnungen entnehmbar.

### Zeichnung

Ausführungsbeispiele der Erfindung sind in der Zeichnung dargestellt und werden in der nachfolgenden Beschreibung näher erläutert. Es zeigen Figur 1 eine Schaltungsanordnung mit geregeltem Bremsstrom, Figur 2 das zugehörige Diagramm mit dem zeitlichen Verlauf der Ströme in den zwei Teilwicklungen, Figur 3 ein vereinfachtes Ausführungsbeispiel mit zwei Umschaltern, Figur 4 ein zweites Ausführungsbeispiel mit einem Leistungstransistor, Figur 5 das dazugehörige Diagramm mit dem zeitlichen Verlauf der Ströme in den zwei Feldwicklungen, Figur 9 ein weiteres Ausführungsbeispiel.

### Beschreibung der Ausführungsbeispiele

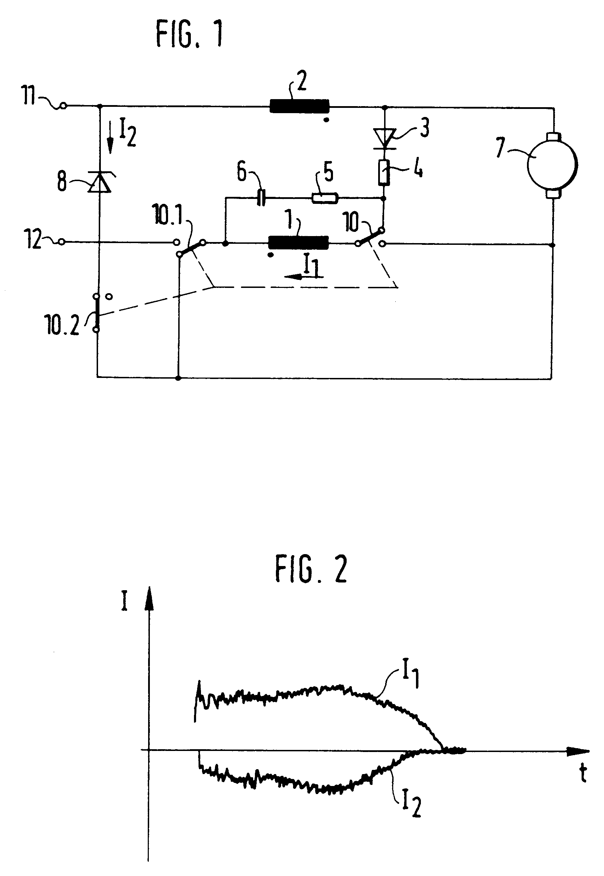

Ein erstes Ausführungsbeispiel ist in Figur 1 zu sehen. Der Anker 7 liegt zu den Feldwicklungen 1 und 2 in Reihe, wobei die Feldwicklung 1 über die Umschalter 10 und 10.1 umgeschaltet werden kann. Die Spannungsversorgung des Elektromotors erfolgt über den Anschluß 11 auf die Feldspule 2 und den Anschluß 12 auf einen der Umschaltkontakte des Umschalters 10.1. Der zweite Umschaltkontakt des Umschalters 10.1 ist mit einem Schalter 10.2 verbunden, der eine Zenerdiode 8 in Flußrichtung mit der Klemme 11 verbindet. Gleichzeitig führt von diesem Kontakt des Umschalters 10.1 eine Verbindung zu einem Umschaltkontakt des Schalters 10 und dem einen Anschluß des Ankers 7. An den zweiten Anschluß des Ankers 7, der mit der Feldwicklung 2 verbunden ist, ist eine Diode 3 in Flußrichtung geschaltet, die über einen Widerstand 4 auf den noch freien Umschaltkontakt des Umschalters 10 führt. Weiterhin ist von diesem Umschaltkontakt des Umschalters 10 ein Widerstand 5 mit einem Kondensator 6 in Reihe geschaltet und an den Mittenkontakt des Umschalters 10.1 geschaltet. Die Umschalter 10, 10.1 und 10.2 sind mechanisch gekoppelt und schalten bei Betätigung gleichzeitig um. Im Bremsbetrieb ist die umschaltbare Feldwicklung 1 über den Umschalter 10 an den Widerstand 4 und die Diode 3 mit einem Anschluß angeschlossen, während der zweite Anschluß über den Umschalter 10.1 an den Knoten geführt ist, der aus dem Schalter 10.2 und dem einen Anschluß des Ankers 7 gebildet wird. Die umschaltbare Feldwicklung 1 wie auch die Feldwicklung 2 sind so angeordnet, daß sie im Motorbetrieb von Hauptstrom gleichsinnig im Sinne einer Feldverstärkung geschlossen werden.

Im folgenden wird die Wirkungsweise dieser Schaltungsanordnung beschrieben.

Um mit Universalmotoren zu bremsen, muß das Feld oder der Anker umgepolt werden. Nach dem Abschalten der Spannungsversorgung an den Klemmen 11 und 12 und dem Betätigen der Umschalter 10, 10.1 und 10.2 wird die umschaltbare Feldwicklung 1 dem Anker 7 über den Widerstand 4 und die Diode 3 parallelgeschaltet. Dadurch steigt der Bremsstrom rasch an. Erreicht der Spannungsabfall über dem Anker und damit auch der umschaltbaren Feldwicklung 1 etwa den Wert der Zenerdiode 8, dann beginnt ein Strom durch die Feldwicklung 2 zu fließen. Da die Feldwicklung 2 im entgegengesetzten Wicklungssinn durchflossen wird, entsteht eine Feldschwächung, die den Bremsstrom soweit reduziert, daß während des gesamten Bremsvor- ganges die Ankerspannung in etwa gleich ist. Die Höhe des Brems- stromes kann durch den Wert der Zenerdiode 8 und den Widerstand 4 eingestellt werden. Der Widerstand 4 kann auch entfallen, wenn eine Zenerdiode 8 mit einem entsprechenden Spannungswert ausgewählt wird. Es wird als eine einfache Regelung des Bremsstromes erreicht, der etwa bis zum Stillstand des Motors nahezu konstant ist. Eine Strom- begrenzung durch Bremswiderstände ist nicht erforderlich.

In Figur 2 ist der zeitliche Verlauf des Bremsstromes in der Feldspule 1 dargestellt und zusätzlich der niedrigere Stromverlauf aufgezeichnet, der durch die Feldwicklung 2 fließt. Die Stromverläufe durch die Feldwicklungen (siehe Figur 2) sind bis nahezu zum Stillstand des Ankers 7 konstant. Für mit Wechselstrom betriebene Elektromotoren muß sichergestellt werden, daß bei Bremsbetrieb die Erregung der Maschine ausreichend in derselben Richtung erfolgt. Dies wird dadurch erreicht, daß der Kondensator 6 über den Widerstand 5 und die Diode 3 auf den Spitzenwert der Wechselspannung aufgeladen wird. Bei Beginn der Bremsung entlädt sich der Kondensator 6 über den Widerstand 5 auf die Feldwicklung 1 und leitet so den Bremsvorgang in einer reproduzierbaren Weise ein.

Wie aus Figur 2 zu ersehen ist, ist besonders vorteilhaft bei dieser Schaltungsanordnung, daß der Strom durch die Feldwicklung 2 erheblich kleiner ist als der in der Feldwicklung 1. Dadurch ist es möglich, die zur Regelung des Bremsstromes notwendigen Bauelemente mit entsprechend niedrigerer Verlustleistung auszulegen.

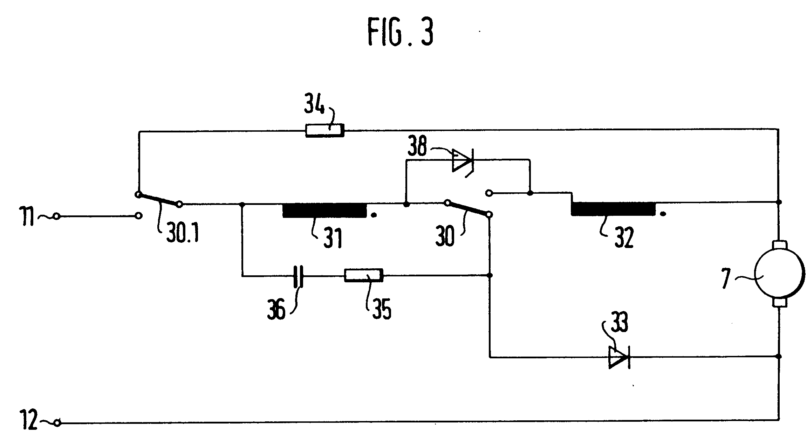

Ein weiteres, vereinfachtes Ausführungsbeispiel ist in Figur 3 zu sehen. In dieser Schaltungsanordnung it der Schalter 10.2 überflüssig geworden. Hier ist die umschaltbare Feldwicklung 31 über die Parallelschaltung vom Umschalter 30 und der Zenerdiode 38 an die Feldwicklung 32 angeschlossen, während der zweite Anschluß der Feldwicklung 32 mit dem Anker 7 verbunden ist. Der zweite Anschluß der Feldwicklung 31 ist im Bremsbetrieb einerseits mit dem Umschalter 30.1 an den Widerstand 34 angeschlossen, der ebenfalls auf den gleichen Anschluß des Ankers 7 geführt ist. Andererseits ist im Motorbetrieb die umschaltbare Feldwicklung 31 über den Umschalter 30.1 mit der Anschlußklemme 11 verbunden. Parallel zur umschaltbaren Feldwicklung 31 ist die Reihenschaltung aus dem Kondensator 36 und dem Widerstand 35 an den Umschalter 30 angeschlossen. An diesem Punkt ist ebenfalls die Diode 33 in Flußrichtung mit dem anderen Anschluß des Ankers 7 verbunden, der zur Netzklemme 12 geführt ist.

Die Wirkungsweise dieser Schaltungsanordnung ist die gleiche wie die in Figur 1 beschriebene, so daß sich eine weitere Erläuterung erübrigt. Der Vorteil in dieser Schaltungsanordnung besteht darin, daß der Schalter 10.2 nicht mehr benötigt wird.

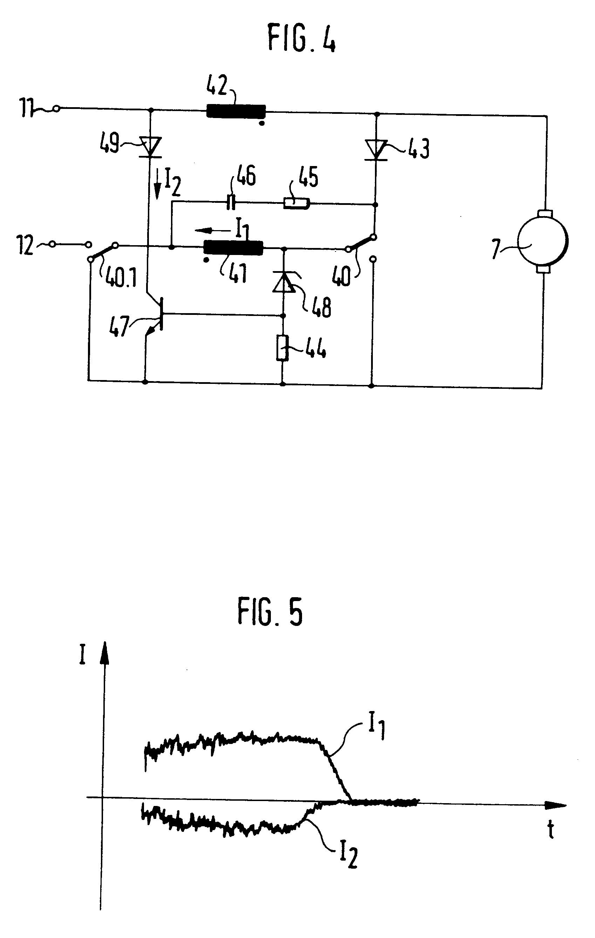

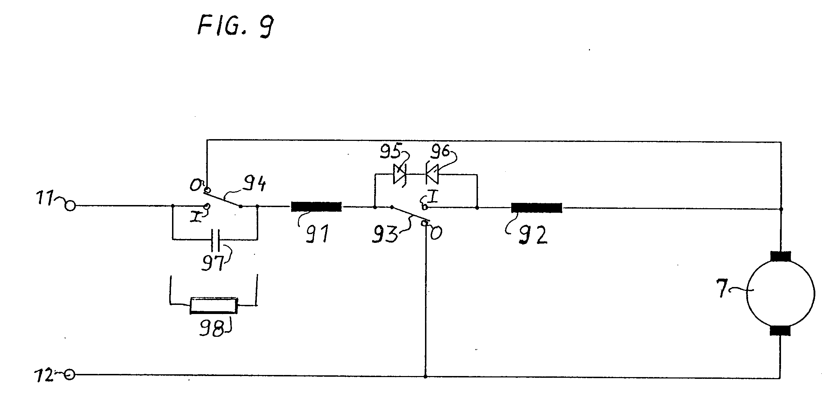

Ein drittes Ausführungsbeispiel der Erfindung ist in der Figur 4 dargestellt. Hier wird anstelle des Schalters 10.2 ein Halbleiterschalter 47 eingesetzt, dessen Kollektor über die Diode 49 mit der Klemme 11 bzw. einem Anschluß der Feldwicklung 42 verbunden ist. Der Emitter des Schalttransistors ist über die Umschalter 40 und 40.1 mit dem einen Anschluß der umschaltbaren Feldwicklung 41 verbunden. Die Basis des Halbleiterschalters 47 geht zum Mittenabgriff, der aus der Zenerdiode 48 und dem Widerstand 44 gebildet wird. Der zweite Anschluß der Zenerdiode 48 ist mit dem zweiten Anschluß der umschaltbaren Feldwicklung 41 verbunden, während der zweite Anschluß des Widerstandes 44 an den Anschluß des Emitters des Halbleiterschalters 47 geführt ist. Die Feldwicklungen 41 und 42 sind über die Diode 43 und den Umschalter 40 miteinander verbunden. Eine weitere Beschreibung der Bauelemente ist nicht notwendig, da sie identisch ist mit der in Figur 1 angeführten Ausführung.

Die Wirkungsweise der in Figur 4 dargestellten Schaltungsanordnung ist vergleichbar mit der in Figur 1. Steigt am Mittenabgriff der Reihenschaltung, die aus der Zenerdiode 48 und dem Widerstand 44 gebildet wird, die Spannung über den Schwellwert des Halbleiterschalters 47 an, dann wird dieser leitend. Durch die Feldwicklung 42 fließt nun ein Strom über die Diode 49 und die Kollektor-Emitter-Strecke des Halbleiterschalters 47, der im Sinne einer Feldschwächung wirkt. Damit wird der Bremsstrom durch den Anker 7 konstant gehalten.

Wie aus Figur 5 zu ersehen ist, sind auch hier die Ströme durch die Feldwicklungen 41 und 42 nahezu über den gesamten Bremsweg konstant. Auch hier ist besonders vorteilhaft, daß über die Diode 49 und den Transistor 47 nur ein Teilstrom des Gesamtstromes fließt.

Die dargestellten erfindungsgemäßen Ausführungsbeispiele eignen sich für Universalmaschinen, die am Wechselspannungsnetz betrieben werden. Werden die Universalmaschinen mit Gleichspannung versorgt, dann vereinfachen sich die vorgeschlagenen Schaltungsanordnungen.

In Figur 9 ist ein sechstes Ausführungsbeispiel dargestellt. Auch in diesem Ausführungsbeispiel ist die Feldwicklung in eine umschaltbare und nicht umschaltbare Feldwicklung 91, 92 geteilt. Die umschaltbare Feldwicklung 91 wird über die Umschalter 93, 94 entweder dem Anker 7 parallelgeschaltet (Bremsbetrieb: Schalterstellung 0) oder in Reihe zur nicht umschaltbaren Feldwicklung 92 an das Wechselspannungsnetz angeschlossen (Motorbetrieb: Schalterstellung I). Parallel zum Umschalter 94 ist ein Kondensator 97 so geschaltet, daß er ständig die umschaltbare Feldwicklung mit einem kleinen Dauerstrom beaufschlagt. Wird eine Gleichspannung verwendet, dann wird in weiterer Ausgestaltung der Erfindung der Kondensator 97 durch einen vergleichbaren Widerstand 98 ersetzt. Parallel zum Umschalter 93 sind in Reihe zu den Feldwicklungen 91, 92 zwei entgegengesetzt gepolte Zenerdioden 95, 96 geschaltet, die erst bei Erreichen ihrer Schaltschwelle leitend werden. Wenn anstelle der Zenerdioden eine Regelschaltung verwendet wird, ist der Bremsstrom über der Bremszeit veränderbar. Dadurch kann der Bremsvorgang so gestaltet werden, daß beispielsweise der Bremseinsatz weich erfolgt und das Bremsmoment den Motorbedingungen anpaßbar ist.

Die Wirkungsweise dieser Schaltung ist wie folgt.

Sind die Umschalter 93, 94 in Stellung I geschaltet, dann liegt der bekannte Motorbetrieb des Reihenschlußmotors vor. Die Umschalter 93, 94 sind untereinander gekoppelt, so daß deren Schaltkontakte gleichzeitig umschalten.

Beim Umschalten auf Bremsbetrieb wird die umschaltbare Feldwicklung 91 dem Anker 7 parallelgeschaltet und gleichzeitig umgepolt.

In der umschaltbaren Feldwicklung 91 wird nun durch des rasch ansteigenden Bremsstrom eine Spannung induziert, die bei Erreichen der Schaltschwellen der Zenerdioden 95, 96 zu einer Gegenerregung in der nicht umschaltbaren Feldwicklung 92 führt. Dadurch fließt ein Gegenerregerstrom, der ein weiteres Ansteigen des Bremsstromes verhindert.

Da die Spannung an den Zenerdioden 95, 96 etwa konstant ist - wenn man von einem Temperaturgang absieht - ist auch der Bremsstrom konstant, da er durch die Gegenerregung geregelt wird.

Um die Selbsterregung der umschaltbaren Feldwicklung 91 auch bei ungünstigen Betriebsbedingungen, die beispielsweise durch einen verschmutzten oder abgebrannten Kollektor auftreten, sicherzustellen, wird über den Kondensator 97 ein vom Netz gespeister Dauerstrom der umschaltbaren Feldwicklung 91 zugeführt. Der Dauerstrom bewirkt nach einer kurzzeitigen Unterbrechung in vorteilhafter Weise einen erneuten Aufbau der Selbsterregung, so daß ein unerwünschtes Austrudeln des Motors sicher vermieden wird. Bei der bekannten Ladeeinrichtung erfolgt dagegen nur ein einmaliger Anstoß der Selbsterregung der Feldwicklung, der solange wirkt, bis der Ladekondensator entladen ist.

Durch diese einfache Anordnung der Feldwicklungsteile 91, 92 werden keine zusätzlichen Schaltkontakte benötigt, so daß der Aufbau der Bremseinrichtung sehr kostengünstig ist.

## Patentansprüche

1. Schaltungsanordnung zur Abbremsung eines Reihenschlußmotors, vorzugsweise eines Universalmotors, wobei der Reihenschlußmotor einen umschaltbaren Feldwicklungsteil (1; 31; 41; 91) zur Abbremsung des Motors und einen nicht umschaltbaren Feldwicklungsteil (2; 32; 42; 92) aufweist, und mit Mitteln zur Begrenzung des Bremsstromes, wobei der umschaltbare Feldwicklungsteil (1; 31; 41; 91) dem Anker (7) Parallelgeschaltet ist, dadurch gekennzeichnet, daß der Spannungsabfall des umgeschalteten Feldwicklungsteils (1; 31; 41; 91) erfaßt wird und daß bei Überschreiten einer vorgegebenen Spannung im Sinne einer Feldschwächung ein Strom durch die nicht umgeschaltete Feldwicklung (2; 32; 42; 92) fließt.

2. Schaltungsanordnung nach Anspruch 1, dadurch gekennzeichnet, daß parallel zum umschaltbaren Feldwicklungsteil (1; 31; 41) ein RC-Glied (5, 6; 35, 36; 45, 46) angeordnet ist.

3. Schaltungsanordnung nach Anspruch 2, dadurch gekennzeichnet, daß das RC-Glied (5, 6; 35, 36; 45, 46) über eine Diode (3; 33; 43) aufladbar ist.

4. Schaltungsanordnung nach Anspruch 1, dadurch gekennzeichnet, daß der umschaltbare Teil (91) der Feldwicklung über einen Kondensator (97) und/oder Widerstand (98) mit der Netzspannung verbunden ist (Figur 9).

5. Schaltungsanordnung nach einem der vorhergehenden Ansprüche, dadurch gekennzeichnet, daß die vorgegebene Spannung durch eine Zenerdiode (8; 38; 48; 95; 96) bestimmt ist, die an dem umschaltbaren Feldwicklungsteil (1; 31; 41) angeschlossen ist.

6. Schaltungsanordnung nach einem der vorhergehenden Ansprüche, dadurch gekennzeichnet, daß zum umschaltbaren Feldwicklungsteil (1; 31; 41) Mittel zur Einstellung des Bremsstromes, wie beispielsweise ein Widerstand (4; 34; 44) in Reihe geschaltet ist.

7. Schaltungsanordnung nach einem der vorhergehenden Ansprüche, dadurch gekennzeichnet, daß bei in Reihe geschalteten Feldwicklungsteilen (31, 32) im Bremsbetrieb zwischen dem umschaltbaren Feldwicklungsteil (31) und dem nicht umschaltbaren Feldwicklungsteil (32) eine Zenerdiode (38) geschaltet ist, und daß der umschaltbare Feldwicklungsteil (31) über eine Diode (33) und Widerstand (34) dem Anker (7) Parallelgeschaltet ist (Figur 3).

8. Schaltungsanordnung nach einem der Ansprüche 1 bis 6, dadurch gekennzeichnet, daß parallel zum umschaltbaren Feldwicklungsteil (41) eine Reihenschaltung aus Zenerdioden (48) und Widerstand (44) angeordnet ist, und daß an dem Mittenabgriff der Reihenschaltung eine Teilspannung abgegriffen wird, die einen Halbleiterschalter (47) ansteuert, der den Strom durch den nicht umschaltbaren Feldwicklungsteil (42) steuert (Figur 4).

9. Schaltungsanordnung nach Anspruch 8, dadurch gekennzeichnet, daß durch den Halbleiterschalter (47) der nicht umgeschaltete Feldwicklungsteil (42) über eine Diode (49) dem Anker (7) parallel geschaltet ist (Figur 4).

10. Schaltungsanordnung nach einem der vorhergehenden Ansprüche, dadurch gekennzeichnet, daß der nicht umschaltbare Teil (92) der Feldwicklung über zwei gegeneinander geschaltete Schwellwertschalter, vorzugsweise zwei Zenerdioden (95, 96) dem Anker (7) parallel schaltbar ist (Figur 9).

11. Schaltungsanordnung nach Anspruch 10, dadurch gekennzeichnet, daß die Schaltschwellen der Zenerdioden (95, 96) in etwa gleich sind.

12. Schaltungsanordnung nach eimem der vorhergehenden Ansprüche, dadurch gekennzeichnet, daß der nicht umschaltbare Teil (92) der Feldwicklung über einen Schwellwertschalter, vorzugsweise eine Zenerdiode dem Anker (7) parallel schaltbar ist (Figur 9).

## Claims

1. Circuit arrangement for braking a series-wound motor, preferably a universal motor, in which the series-wound motor exhibits a switchable field winding part (1; 31; 41; 91) for braking the motor and a non-switchable field winding part (2; 32; 42; 92), and comprising means for limiting the braking current, the switchable field winding part (1; 31; 41; 91) being connected in parallel with the armature (7), characterised in that the voltage drop of the switched field winding part (1; 31; 41; 91) is detected and that when a predetermined voltage is exceeded in the sense of a weakening of the field, a current flows through the non-switched field winding (2; 32; 42; 92).

2. Circuit arrangement according to Claim 1, characterised in that an RC section (5, 6; 35, 36; 45, 46) is arranged in parallel with the switchable field winding part (1; 31; 41).

3. Circuit arrangement according to Claim 2, characterised in that the RC section (5, 6; 35, 36; 45, 46) can be charged up via a diode (3; 33; 43).

4. Circuit arrangement according to Claim 1, characterised in that the switchable part (91) of the field winding is connected to the mains voltage via a capacitor (97) and/or resistor (98) (Figure 9).

5. Circuit arrangement according to one of the preceding claims, characterised in that the predetermined voltage is determined by a Zener diode (8; 38; 48; 95; 96) which is connected to the switchable field winding part (1; 31; 41).

6. Circuit arrangement according to one of the preceding claims, characterised in that means for setting the braking current such as, for example, a resistor (4; 34; 44) are connected in series with the switchable field winding part (1; 31; 41).

7. Circuit arrangement according to one of the preceding claims, characterised in that in the case of series-connected field winding parts (31, 32), a Zener diode (38) is connected between the switchable field winding part (31) and the non-switchable field winding part (32) in braking mode, and that the switchable field winding part (31) is connected in parallel with the armature (7) via a diode (33) and resistor (34) (Figure 3).

8. Circuit arrangement according to one of Claims 1 to 6, characterised in that a series circuit of Zener diodes (48) and resistor (44) is arranged in parallel with the switchable field winding part (41), and that a part-voltage, which drives a semiconductor switch (47) which controls the current through the non-switchable field winding part (42), is picked up at the centre tap of the series circuit (Figure 4).

9. Circuit arrangement according to Claim 8, characterised in that the non-switched field winding part (42) is connected in parallel with the armature (7) via a diode (49) by means of the semiconductor switch (47) (Figure 4).

10. Circuit arrangement according to one of the preceding claims, characterised in that the non-switchable part (92) of the field winding can be connected in parallel with the armature (7) via two oppositely connected threshold switches, preferably two Zener diodes (95, 96) (Figure 9).

11. Circuit arrangement according to Claim 10, characterised in that the switching thresholds of the Zener diodes (95, 96) are approximately equal.

12. Circuit arrangement according to one of the preceding claims, characterised in that the non-switchable part (92) of the field winding can be connected in parallel with the armature (7) via a threshold switch, preferably a Zener diode (Figure 9).

## Revendications

1. Circuit de freinage d'un moteur-série, de préférence d'un moteur universel, dans lequel le moteur série présente une partie commutable d'enroulement d'excitation (1, 31, 41, 91) pour freiner le moteur et une partie non commutable d'enroulement d'excitation (2, 32, 42, 92) et ave des moyens pour limiter le courant de freinage, dans lequel la partie commutable de l'enroulement d'excitation (1, 31, 41, 91) est montée en parallèle à l'induit (7), circuit de freinage caractérisé en ce qu'on détecte la chute de tension de la partie (1, 31, 41, 91) de l'enroulement d'excitation commutable et en ce que lors du dépassement d'une tension prédéfinie, un courant passe dans le sens d'une désexcitation à travers l'enroulement d'excitation commutable (2, 32, 42, 92).

2. Circuit selon la revendication 1, caractérisé en ce qu'en parallèle à la partie commutable (1, 31, 41) de l'enroulement d'excitation, on dispose un circuit combiné résistance-capacité (5, 6, 35, 36, 45, 46).

3. Circuit selon la revendication 2, caractérisé en ce que le circuit combiné résistan-cecapacité (5, 6, 35, 36, 45, 46) peut être chargé via une diode (3, 33, 43).

4. Circuit selon la revendication 1, caractérisé en ce que la partie commutable (91) de l'enroulement d'excitation est reliée à la tension du réseau par un condensateur (97) et/ou une résistance 96 (figure 9).

5. Circuit selon l'une des revendications précédentes, caractérisé en ce que la tension prédéfinie est déterminée par une diode de Zener (8, 38, 48, 95, 96) qui est raccordée à la partie commutable de l'enroulement d'excitation (1, 31, 41).

6. Circuit selon l'une des revendications précédentes, caractérisé en ce que l'on monte en série avec la partie commutable de l'enroulement d'excitation (1, 31, 41) des moyens pour détecter le courant de freinage, comme par exemple une résistance (4, 34, 44).

7. Circuit selon l'une des revendications précédentes, caractérisé en ce que dans le cas des parties d'enroulement d'excitation montées en série (31, 32), on monte une diode de Zener (38) entre la partie commutable de l'enroulement d'excitation (31) et la partie non commutable de l'enroulement d'excitation (32) et en ce que la partie commutable de l'enroulement d'excitation (31) est montée via une diode (33) et une résistance (34) en parallèle à l'induit (7) (figure 3).

8. Circuit selon l'une des revendications 1 à 6, caractérisé en ce qu'en parallèle à la partie commutable de l'enroulement d'excitation (41), on dispose un circuit en série se composant d'une diode de Zener (48) et d'une résistance (44) et en ce que l'on prélève sur la prise médiane du circuit en série une tension partielle qui commande un interrupteur à semiconducteur (47) qui règle le courant à travers la partie non commutable de l'enroulement d'excitation (42) (figure 4).

9. Circuit selon la revendication 8, caractérisé en ce qu'à travers l'interrupteur à semiconducteur (47), la partie non commutable de l'enroulement d'excitation (42) est montée via une diode (49) en parallèle à l'induit (7).

10. Circuit selon l'une des revendications précédentes, caractérisé en ce que la partie non commutable (92) de l'enroulement d'excitation peut être mise en parallèle à l'induit (7) via deux interrupteurs à valeur de seuil montés en opposition, de préférence deux diodes de Zener (95, 96) (figure 9).

11. Circuit selon la revendication 10, caractérisé en ce que les valeurs de seuil des diodes de Zener (95, 96) sont à peu près égales.

12. Circuit selon l'une des revendications précédentes, caractérisé en ce que la partie non commutable (92) de l'enroulement d'excitation peut être mise en parallèle à l'induit (7) via un interrupteur à valeur de seuil, de préférence une diode de Zener.
